Europäisches Patentamt

European Patent Office

Office européen des brevets

(11) Publication number: **0 058 344**

**B1**

(12) **EUROPEAN PATENT SPECIFICATION**

(45) Date of publication of patent specification: **22.05.85**

(21) Application number: **82100765.5**

(22) Date of filing: **03.02.82**

(51) Int. Cl.⁴: **G 02 B 6/36**

(54) **Method of terminating an optical fiber.**

(30) Priority: **12.02.81 JP 18045/81**

(43) Date of publication of application:
**25.08.82 Bulletin 82/34**

(45) Publication of the grant of the patent:
**22.05.85 Bulletin 85/21**

(84) Designated Contracting States:
**DE FR GB**

(56) References cited:
**EP-A-0 001 702**
**EP-A-0 011 561**
**EP-A-0 025 013**
**WO-A-82/01077**
**DE-A-2 855 783**
**DE-A-2 943 180**
**GB-A-1 480 445**

**REVIEW OF THE ELECTRICAL
COMMUNICATION LABORATORIES, Vol. 27,
no. 7-8 July-August 1979 H. TSUCHIYA et al.
"Single Mode Fiber Connectors" pages 543 to
554**

(73) Proprietor: **Kabushiki Kaisha Toshiba
72, Horikawa-cho Saiwai-ku
Kawasaki-shi Kanagawa-ken 210 (JP)**

(72) Inventor: **Donuma, Kenichi
2-4-19, Higashikoshigaya
Koshigaya-shi Saitama-ken (JP)**
Inventor: **Takezawa, Hatsuo
2408-304, Toshiba-Isogo-apartment 2-4-3
Shiomidai Isogo-ku Yokohama-shi (JP)**

(74) Representative: **Patentanwälte Henkel,
Pfenning, Feiler, Hänzel & Meinig et al
Möhlstrasse 37
D-8000 München 80 (DE)**

## Description

The present invention relates to a method of terminating an optical fiber.

A conventional optical fiber cord has an optical fiber having a diameter of 125 to 250 μm. The optical fiber consists of a core having a diameter of several micrometers to several tens of micrometers and a cladding covering this core. The optical fiber is covered by a primary coat of silicon resin and is then covered with a jacket of polyamide. In an optical fiber cord of this type, the optical fiber covered by the primary coat and the jacket is housed in a sheath of a PVC and is extended within the sheath, and resinous fibers for improving the tensile strength of the fiber cord such as Kevlar (trade name) are provided between the sheath and the jacket. The plug of the optical connector is mounted on the end of the optical fiber cord. This plug is optically coupled to another optical fiber cord or an attenuator through an aligner. Since this plug is inserted and removed from the aligner, the outer surface of the plug must have sufficient hardness. Furthermore, the end face of the plug is brought into contact with the plug or the like of the coupled connector. Therefore, the end face of the plug must be optically flat. In order to minimize power loss when the plug is coupled to the aligner, a small hole for receiving the optical fiber must be formed in the plug along the central axis of the plug with high precision. However, if the plug itself is made of a sufficiently hard material, it is difficult to form a small hole of a size of 125 to 250 μm for receiving the optical fiber in the plug with high precision. When this precision is degraded, the power loss increases, and the optical plug cannot practically be used. On the other hand, if the plug itself is made of a material which allows easy machining, fine scratches are formed in the outer surface of the optical plug every time the optical plug is inserted in or removed from the plug aligner. This presents the problems of degraded durability and reliability of the plug.

From GB—A—2 012 069 a method for terminating an optical fiber within the terminal end of a fiber optic cable holder is known. The holder assembly includes a terminal pin having a cable receiving bore extending into the pin from its terminal end bore of preferably smaller dimension extending from the terminal pin forward terminating end. A resilient insert member having a central aperture dimensioned for receiving the optical fiber and an outer portion which is greater in dimension than the terminal end bore when the insert member is in its free uncompressed state is forced into the terminal end bore. The terminal end bore uniformly compresses the resilient insert member thereby causing the central aperture to be uniformly contracted about the optical fiber as the insert member is forced into the terminal end bore. A main object of this known method is to align and terminate an optical fiber of a fiber optic cable in a field environment where specialized adhesive preparing and curing equipment is not available.

In the prior international application WO 82/ 01077 (which falls under Article 54, paragraph 3, EPC) a method for obtaining an accurate concentric fastening of an optical fiber in a connector is disclosed, wherein a ductile bushing is arranged to surround the fiber in a recess in the end of the connector, which comprises the following steps: inserting into the recess a solid rod of a non-elastic ductile material; applying from outside relative to the connector an axial force to the rod for obtaining an expansion thereof in radial direction resulting in a fixing relative to the inner wall of the recess; taking up a hole in the rod with an accurate concentricity relative to the outer surface of the connector; inserting the optical fiber into said hole in the rod; and applying from outside relative to the connector an axial force to the rod for obtaining an expansion thereof in radial direction resulting in a reduction of the hole in the rod, thereby obtaining the accurate concentric fastening of the optical fiber. Therefore, this method has the object to fasten the optical fiber without an adhesive by compressing the rod in order to clamp the fiber.

It is an object of the method of the present invention to provide an optical fiber termination wherein a plug is provided which is sufficiently hard so that fine scratches may not be easily formed when the plug is inserted into or removed from an aligner or another device, and in which a small hole of high precision for receiving an optical fiber is formed.

It is another object of the method of the present invention to provide an optical fiber termination wherein a plug is provided in which a small hole of high precision for receiving the optical fiber is formed and which has sufficient mechanical strength.

According to the present invention, the method of terminating an optical fiber comprises the steps of:

preparing a cylindrical rod of great hardness having a through-hole extending along a central axis thereof;

inserting and fixing a core member having a hardness lower than the hardness of said cylindrical rod into one end of said through-hole;

forming a small hole in said inserted core member along the central axis of said cylindrical rod, which small hole is so dimensionned that the tip end of an optical fiber to be inserted therethrough is a sliding fit therein;

extending an optical fiber consisting of a core and a cladding into said through-hole of said cylindrical rod and inserting the tip end of said optical fiber in said small hole of said core member; and

fixing said optical fiber to said cylindrical rod.

This invention can be more fully understood from the following detailed description when taken in conjunction with the accompanying drawings, in which:

Fig. 1 is a sectional view showing an optical connector for an optical fiber terminated according to the method of the present invention;

Fig. 2 is a side view showing the construction of the optical fiber cord;

Fig. 3 is a sectional view showing an aligner to which the optical connector shown in Fig. 1 is mounted;

Figs. 4 and 5 are sectional views showing the front ends of the plugs; and

Fig. 6 is a graph showing the relationship between the separation rate and power loss.

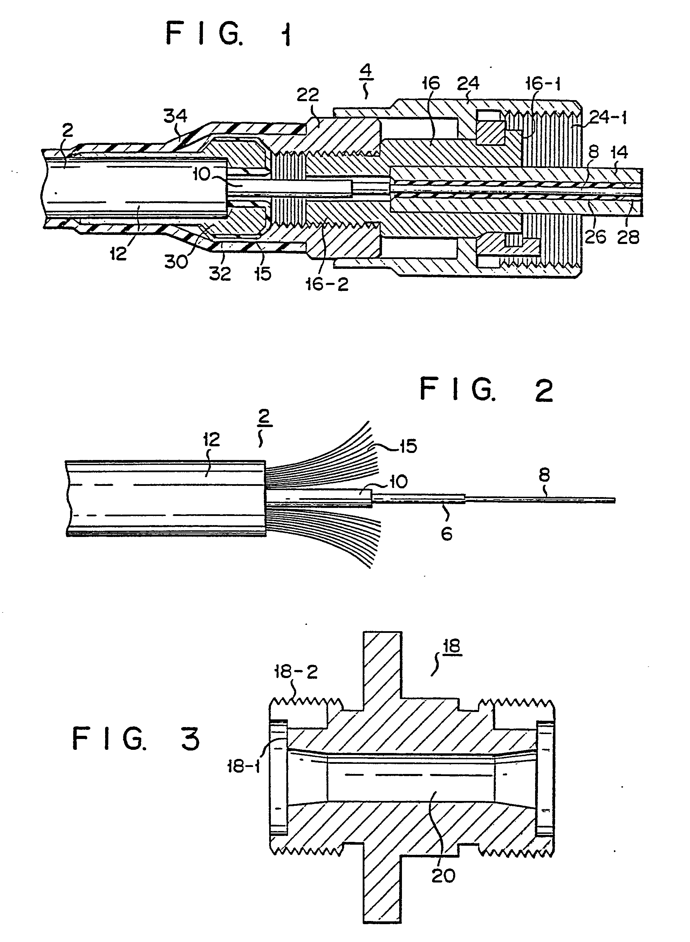

Fig. 1 shows an optical connector 4 coupled to the end of an optical fiber cord 2. The optical fiber cord 2, as shown in Fig. 2, includes an optical fiber 8 which consists of a core and a cladding and which is covered with a primary coat 6 of silicon resin. The optical fiber 8 is covered with a jacket 10 of polyamide and extends within a sheath 12 of a PVC. Resinous fibers 15, for example, Kevlar (trade name) for improving the tensile strength of the optical fiber cord 2 is interposed between the sheath 12 and the jacket 10. As shown in Fig. 1, the optical connector 4 has a cylindrical plug 14, the end of which is fixed to a plug holder 16. Thus, a part of the plug 14 extends outward from the plug holder 16 for a certain length. The plug holder 16 has a flat surface 16-1 which is brought into contact with an end face 18-1 of an aligner 18 when the plug 14 is inserted into an insertion hole 20 of the aligner shown in Fig. 3. The outer circumference of a base 16-2 of the plug holder 16 is threaded to provide a threaded portion which threadably engages with a cylindrical bushing 22. The inner surface of the cylindrical bushing 22 is threaded for achieving this threadable engagement. The plug holder 16 and the bushing 22 are inserted into a cylindrical lock-out socket 24. The lock-out socket 24 is rotatably mounted on the plug holder 16. A threaded portion 24-1 to threadably engage with a threaded portion 18-2 formed on the outer circumference of the joint portion of the aligner 18 is formed on the inner surface of the lock-out socket 24.

According to the the present invention, the inner diameter of the insertion hole 20 of the aligner 18 is 2.501 to 2.502 mm. A hole of 1.2 mm diameter is formed, along the central axis of the plug 14, in the plug 14 which has an outer diameter of 2.499 to 2.500 mm and which is made of a material of great hardness, such as a material having a hardness HRC of 50 or higher. Within the hole of the plug 14 is inserted a core member 28 of about 2 mm length which is made of a material with a hardness to allow fine processing, for example, a material having a hardness HRC of about 10 or lower. If the outer diameter of the optical fiber 8 is 125 µm, a small hole of 126 µm diameter for receiving the front end of the optical fiber 8 is formed in the core member 28 along the central axis of the plug 14 with high precision. The center axis of this small hole is aligned with the central axis of the plug 14. The eccentricity of the center axis of the small hole from the central axis of the plug 14 is kept within a tolerance of 1 µm.

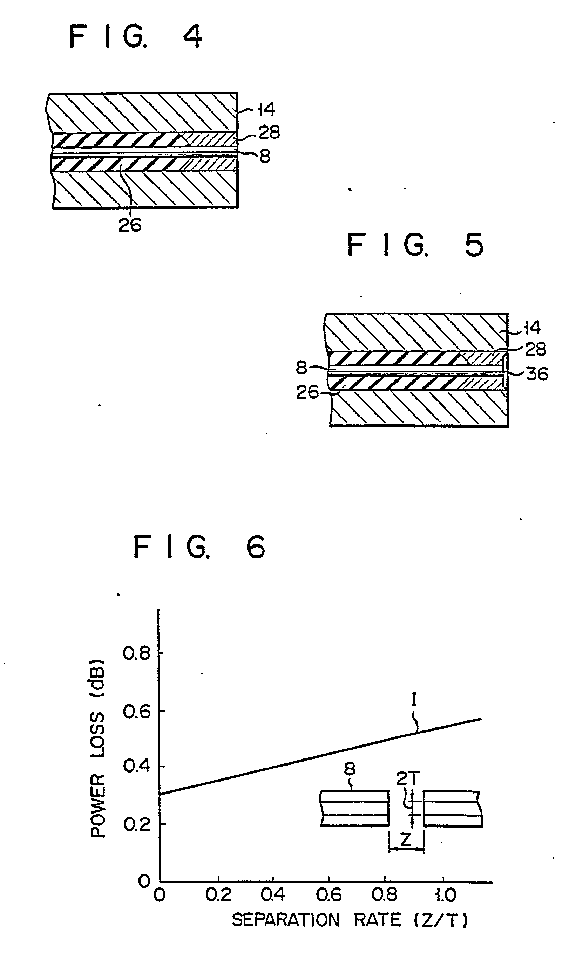

The jacket 10 extending outward from the optical fiber cord 2 is inserted into the hole formed in the plug holder 16. The optical fiber 8 extending from the jacket 10 is inserted into the small hole of the core member 28 through the hole formed in the plug 14 as shown in Fig. 4. The end face of the optical fiber 8 is aligned with the end face of the plug 14. The optical fiber 8 is securely fixed to the plug 14 by an adhesive material 26 filled in the hole of the plug 14. The end face of the optical fiber 8 and the end face of the plug 14 are optically flat. The end of the sheath 12 is mounted to a cap 30. The resinous fibers 15 extending outward from the opening of the cap 30 together with the jacket 10 cover the outer circumferential surface of the cap 30. The resinous fibers 15 are clamped between the outer circumferential surface of the cap 30 and a bent piece 32 extending from the bushing 22. The sheath 12, the cap 30, the bushing 22, and the bent piece 32 of the bushing 22 are covered by a resin tube 34.

The optical plug 14 as described above is manufactured in the manner to be described below. A raw material of SUS 440C stainless steel is prepared from 0.95 to 1.20% by weight of carbon, 1.00% by weight or less of silicon, 1.00% by weight or less of manganese, 1.6 to 1.8% by weight of chromium, 0.75% by weight of molybdenum, and iron. This raw material is processed into a cylindrical rod having a length of 14 mm and an outer diameter of about 2.5 mm. A hole of about 1.2 mm diameter is formed in the cylindrical rod along the central axis thereof. The cylindrical rod is quenched to increase the hardness, thus providing the element of the plug 14. Into one end of the openings of the hole of the plug element thus obtained is inserted under pressure a columnar core member of about 2 mm length and of SUS 303 stainless steel consisting of 0.15% by weight or less of carbon, 8 to 11% by weight of nickel, 17 to 19% by weight of chromium, and iron. A small hole of 126 µm diameter is correctly formed in the core member 28 along the central axis of the plug 14 by the fine processing technique. Since the core member 28 is not quenched and has a hardness lower than that of the plug 14, the formation of the small hole in the core member 28 is easy and can be formed with high precision. The other end of the plug 14 is fixed to the plug holder 16 by an adhesive material and is located in the socket. After the optical fiber cord 2 is fixed to the cap 30 and the bushing 22 and is covered by the tube 34 as shown in Fig. 1, the jacket 10 is inserted into the plug holder 16, the optical fiber 8 is inserted into the plug 14 and the core member 28 and the exceed optical fiber 8 projected from the end face of the plug 14 is cut. Then the cut face of the optical fiber is polished by an abrasive such as an alumina abrasive of 0.3 µm diameter for 10 to 30 minutes to provide an optically flat surface.

In the step of polishing the end face of the plug fiber, a shallow recess 36 can be formed in the end face of the plug 14 as shown in Fig. 5, depending upon the polishing time and the type of abrasive material used. This recess 36 is formed since the core member 28 has a hardness lower than that of the plug 14 and is abraded more during polishing process. This recess 36 serves to protect the end face of the optical fiber 8 and to suppress, a variation (0.2 to 0.3 dB) in coupling loss resulting from an optical contact between the associated optical fibers, to zero. When a recess such as the recess 36 is formed, it is generally considered that power loss or coupling loss increases. However, it is confirmed by the experiments conducted by the present inventors that if the recess 36 is sufficiently shallow, power loss does not increase very much as may be seen from curve I shown in Fig. 6. In Fig. 6, along the ordinate is plotted power loss, and along the abscissa is plotted the separation rate (Z/T) which is the ratio of the core radius T of the optical fiber 8 to the distance Z between a pair of opposed optical fibers 8. As may be seen from the curve I shown in Fig. 6, power loss does not increase very much even if the separation rate (Z/T) increases. If the pair of optical fibers each having a core radius of 25 μm are opposed to each other at a distance of about 5 μm, the increase in power loss is about 0.05 dB as compared to the case wherein the optical fibers are placed next to each other. It may, therefore, be concluded that the formation of the recess 36 does not have significant effects on power loss but rather contributes to protect the end face of the optical fiber 8.

In summary, in accordance with the method of the present invention, there is provided an optical termination for an optical fiber wherein a plug is provided which is less susceptible to damage during mounting or demounting from another member and in which a small hole for receiving the optical fiber is formed with high precision.

The present invention is not limited to the particular embodiment described above. The materials and shapes of the members may be changed as desired.

## Claims

1. A method of terminating an optical fiber, comprising the steps of:

preparing a cylindrical rod of great hardness having a through-hole extending along a central axis thereof;

inserting and fixing a core member (28) having a hardness lower than the hardness of said cylindrical rod into one end of said through-hole;

forming a small hole in said inserted core member (28) along the central axis of said cylindrical rod, which small hole is so dimensionned that the tip end of an optical fiber to be inserted therethrough is a sliding fit therein;

extending an optical fiber (2) consisting of a core and a cladding into said through-hole of said cylindrical rod and inserting the tip end of said optical fiber (2) in said small hole of said core member (28); and

fixing said optical fiber (2) to said cylindrical rod.

2. A method according to claim 1, further comprising the step of polishing with an abrasive material the end face of said optical fiber after having fixed said optical fiber (2) to said cylindrical rod.

3. A method according to claim 1, in which the step of preparing said cylindrical rod includes the step of quenching an element for said cylindrical rod to increase the hardness thereof.

## Patentansprüche

1. Verfahren zur Erzeugung eines Lichtleitfaserendes, dadurch gekennzeichnet, daß

ein zylindrischer Stab großer Härte mit einer längs seiner Mittenachse durchgehend verlaufenden Bohrung vorbereitet wird,

ein Kernelement (28) mit einer geringeren Härte als derjenigen des zylindrischen Stabs in das eine Ende der durchgehenden Bohrung eingesetzt und darin befestigt wird,

im eingesetzten Kernelement (28) längs der Mittenachse des zylindrischen Stabs eine kleine Bohrung ausgebildet wird, die so bemessen ist, daß das durch sie einzuführende Spitzen- oder Vorderende einer Lichtleitfaser mit Gleitsitz darin sitzt,

eine aus einem Kern und einem Überzug bestehende Lichtleitfaser (2) in die durchgehende Bohrung des zylindrischen Stabs vorgeschoben und das Spitzen- oder Vorderende der Lichtleitfaser (2) in die kleine Bohrung des Kernelements (28) eingeführt wird und die Lichtleitfaser (2) am zylindrischen Stab befestigt wird.

2. Verfahren nach Anspruch 1, dadurch gekennzeichnet, daß nach der Befestigung der Lichtleitfaser (2) am zylindrischen Stab die Stirnfläche der Lichtleitfaser mit einem Schleifmittel poliert wird.

3. Verfahren nach Anspruch 1, dadurch gekennzeichnet, daß bei der Vorbereitung des zylindrischen Stabs ein Element (Werkstück) für den zylindrischen Stab zur Erhöhung seiner Härte abgeschreckt wird.

## Revendications

1. Procéde permettant de réaliser une terminaison de fibre optique, comprenant les opérations suivantes:

préparer une tige cylindrique d'une grande dureté comportant un trou passant qui s'étend suivant son axe central;

· insérer et fixer un élément d'âme (28), qui présente une dureté inférieure à la dureté de ladite tige cylindrique, dans une extrémité dudit trou passant;

former un petit trou dans ledit élément d'âme inséré (28) suivant l'axe central de ladite tige cylindrique, lequel petit trou à des dimensions telles que l'extrémité d'une fibre optique à insérer dans ce trou s'y ajuste de manière coulissante;

prolonger une fibre optique (2), consistuée d'une âme et d'une enveloppe, dans ledit trou passant de ladite tige cylindrique et insérer l'extrémité de ladite fibre optique (2) dans ledit petit trou dudit élément d'âme (28); et

fixer ladite fibre optique (2) sur ladite tige cylindrique.

2. Procédé selon la revendication 1, comprenant en outre l'opération consistant à polir à l'aide d'un matériau abrasif la face terminale de ladite fibre optique après avoir fixé ladite fibre optique (2) sur ladite tige cylindrique.

3. Procédé selon la revendication 1, dans lequel l'opération de préparation de ladite tige cylindrique comporte l'opération de trempage d'un élément de formation de ladite tige cylindrique afin d'accroître sa dureté.

FIG. 1

FIG. 2

FIG. 3

# FIG. 4

# FIG. 5

# FIG. 6